# EUROPÄISCHE PATENTSCHRIFT

(11) **EP 1 386 092 B1**
(45) Veröffentlichungstag und Bekanntmachung des Hinweises auf die Patenterteilung: **02.01.2008**
(21) Anmeldenummer: 02732598.4
(22) Anmeldetag: 11.04.2002
(51) Int. Cl.: F16D 65/56, F16D 65/21

(54) **SCHEIBENBREMSE MIT ELEKTROMOTORISCH ANGETRIEBENEM VERSCHLEISSNACHSTELLSYSTEM**
DISK BRAKE COMPRISING AN ELECTRIC MOTOR-DRIVEN WEAR ADJUSTING SYSTEM
FREIN A DISQUE COMPRENANT UN SYSTEME DE REGLAGE D'USURE A ENTRAINEMENT ELECTROMOTORISE

(30) Priorität: 26.04.2001 DE 10120327; 04.03.2002 DE 10209567
(43) Veröffentlichungstag der Anmeldung: 04.02.2004
(73) Patentinhaber: KNORR-BREMSE SYSTEME FÜR NUTZFAHRZEUGE GMBH, 80809 München (DE)
(72) Erfinder: BAUMGARTNER, Johann, 85368 Moosburg (DE)
(74) Vertreter: Mattusch, Gundula
(86) Internationale Anmeldenummer: PCT/EP2002/004037
(87) Internationale Veröffentlichungsnummer: WO 2002/088562

(56) Entgegenhaltungen:
- DE-A- 10 016 162
- DE-A- 19 508 253
- DE-A- 19 853 721
- DE-C- 19 729 024
- US-A- 4 867 283
- US-A- 6 012 556

## Beschreibung

Die Erfindung betrifft eine Scheibenbremse nach dem Oberbegriff des Anspruches 1 sowie ein Verfahren nach dem Oberbegriff des Anspruches 21.

Es sind bereits Zuspannvorrichtungen für Scheibenbremsen bekannt, bei denen eine von der Bremszuspannung unabhängige Verschleißnachstellvorrichtung elektromechanisch angetrieben wird.

So können zur Lüftspieleinstellung beispielsweise Abstandssensoren genutzt werden, deren Signale zur Steuerung des Stellantriebes der Nachstellvorrichtung dienen.

Derartige Steuerungen sind aufgrund des Aufwandes zur Sensierung und zur elektronischen Ansteuerung jedoch aufwendig und auch störanfällig. Systeme dieser Art werden beispielsweise in der EP 0 995 921 A2, in der EP 0 995 923 A2 und in der PCT/WO 99/08018 beschrieben.

Eine deutlich einfachere und darüber hinaus zuverlässige Betriebsweise des mit einem elektromechanischen Antrieb betätigten Verschleißnachstellsystems ist möglich, wenn die Dreheinrichtung bei nicht betätigter Bremse die Bremsbacken mit der Bremsscheibe kurz in Kontakt bringt und dann von dieser Position ausgehend um einen vorbestimmten Betrag, der dem Soll-Lüftspiel entspricht, wieder zurückstellt. Eine derartige Betriebsweise ist in der DE 197 31 696 A1 beschrieben. Steuerungen dieser Art haben sich an sich bewährt. Sie bedürfen jedoch hinsichtlich eines besonderen Betriebsfalles einer weiteren Verbesserung.

Wird gerade in dem Moment, in dem das Nachstellsystem die Bremsbacken zur Einstellung des Lüftspiels an die Bremsscheibe anlegt, eine erneute Bremsung eingeleitet und wärmen sich zudem Bremsbacken und Bremsscheibe infolge der bei der entstehenden Wärmeentwicklung spürbar auf, kann als Folge der Ausdehnung die Bremse auch nach Beendigung dieses Bremsvorgangs so verspannt bleiben, daß der relativ klein dimensionierte Antriebsmotor des Verschleißnachstellsystems aufgrund des als Folge der Verspannung entstehenden Reibwiderstandes in den selbsthemmend ausgelegten Nachstellgewinden zwischen der Nachstellmutter und der Nachstellspindel das Nachstellsystem nicht mehr zurückdrehen kann. Infolge dieser Effekte ist das Lüftspiel an der Bremse nicht wiederherstellbar. Infolge dieses Effektes schleift die Bremse während der Fahrt, was eine weitere hohe Bremstemperatur und einen extrem hohen Verschleiß mit sich bringt.

Es ist daher die Aufgabe der Erfindung, die gattungsgemäße Scheibenbremse derart weiterzuentwickeln, daß in verfahrensmäßiger und konstruktiver Hinsicht in einfacher und zuverlässiger Weise eine Sicherung des Lüftspiels der Bremse gewährleistet wird.

Die Erfindung löst diese Aufgabe in Hinsicht auf die Scheibenbremse durch den Gegenstand des Anspruches 1 und in Hinsicht auf das Verfahren durch den Gegenstand des Anspruches 21.

Nach der Idee der Erfindung ist vorgesehen, daß das Nachstellsystem zusätzlich zum elektromotorischen Antrieb eine das Lösen der Nachstelldreheinrichtung unterstützende Löseeinrichtung aufweist.

Ergibt sich im Betrieb der Scheibenbremse eine Betriebssituation, in welcher der elektromotorische Antrieb aufgrund der Verspannung der Bremse das Lösespiel nicht mehr korrekt einstellen kann, unterstützt die zusätzliche Löseeinrichtung diesen Löseprozeß. Durch die gemeinsame Wirkung aus dem elektromotorischen Antrieb und der ergänzenden Löseeinrichtung bleibt das Lösespiel trotz der Verspannung der Bremse präzise einstellbar.

Es bietet sich an, die Löseeinrichtung rein mechanisch auszulegen. Alternativ ist es auch denkbar, elektromechanisch oder elektronisch betätigte Systeme zur Unterstützung der Lösewirkung einzusetzen. Hier bieten sich beispielsweise Piezo-Elemente an, welche bei Bestromung die Verspannung der Bremse aufheben können.

Nach einem bevorzugten Ausführungsbeispiel der Erfindung ist vorgesehen, daß die Nachstelldreheinrichtung eine Nachstellmutter aufweist, in der eine Drehspindel eingeschraubt ist, welche an einem ihrer Enden ein auf den Bremsbelag wirkendes Druckstück aufweist, wobei die Löseeinrichtung auf die Nachstellmutter oder die Drehspindel einwirkt.

Diese einfache konstruktive Realisierung der Nachstelldreheinrichtung mit einer Nachstellmutter und einer Drehspindel, welche jeweils von einem Elektromotor angetrieben werden, macht es möglich, auf jeder Seite der Scheibenbremse eine separate Nachstelldreheinrichtung mit einem elektromotorischen Antrieb vorzusehen. Dies bietet sich beispielsweise bei Scheibenbremsen an, die als Festsättel ausgeführt sind oder als Bremssattel mit einem sehr geringen Verschiebe- oder Verschwenkweg.

Alternativ ist es denkbar, daß die Nachsteller-Dreheinrichtung eine Drehspindel aufweist, auf die eine Nachstellmutter aufgeschraubt ist, welche an einem ihrer Enden ein auf den Bremsbelag wirkendes Druckstück aufweist, wobei die Löseeinrichtung auf die Nachstellmutter oder die Drehspindel einwirkt.

In Hinsicht auf die Löseeinrichtung für eine Nachstelldreheinrichtung mit Nachstellmutter und Drehspindel sind verschiedenste mechanische Realisierungen denkbar.

Zweckmäßig ist das Rampenprofil direkt in die Stirnfläche der Nachstellmutter oder der Drehspindel eingeformt, insbesondere eingeprägt.

Zweckmäßig ist das Abstützelement der Bremssattel oder ein Element der Zuspanneinheit. Dabei kann das (weitere) Rampenprofil direkt in den Bremssattel oder das Element der Zuspanneinheit eingeformt sein.

Vorteilhaft - da leicht fertigbar - ist das Rampenprofil in eine Rampenscheibe eingeformt, die auf der Stirnfläche der Nachstellmutter oder der Drehspindel unverdrehbar aufliegt.

Eine besonders preiswerte Variante zeichnet sich dadurch aus, daß die Löseeinrichtung dadurch ausgebildet wird, daß die Druckabstützfläche der Nachstellmutter mit einem Rampenprofil versehen ist, wobei auf der Druckabstützfläche eine Abstützscheibe mit einem entgegengesetzten Rampenprofil anliegt und wobei die ebene Rückseite der Abstützscheibe an einer Abstützfläche eines Abstützeelementes anliegt.

Dieses Abstützelement kann beispielsweise der Bremssattel sein oder aber auf der Seite der Zuspannvorrichtung ein Bremshebel oder ein zwischen Bremshebel und Drehspindel bzw. Nachstellmutter gesetztes zusätzliches Kraftübertragungselement.

Vorzugsweise wird die Löseeinrichtung lediglich auf der der Zuspanneinrichtung gegenüberliegenden Seite der Bremse angeordnet. Zum Lösen bzw. Einstellen des Lüftspiels in dem eingangs beschriebenen Sonderfall der verspannten Bremse genügt es, wenn die Bremse zumindest einseitig aus ihrer Verspannung gelöst wird. Aufgrund der Abstützung der Drehspindeln am Bremssattel bietet es sich an, die entsprechende Löseeinrichtung zwischen Bremssattel und Druckstück anzuordnen. Selbstverständlich ist auch eine Variante mit Löseeinrichtung auf beiden Seiten der Bremsscheibe oder aber auf der Seite der Zuspannvorrichtung denkbar.

Durch die Erfindung wird es auf einfache Weise möglich, bei jeder Aktivierung des Nachstellsystems den Bremshebel und/oder die Kolbeneinheit um einen vorbestimmten Betrag durch einen auch bei verspannter Bremse wieder durch die Stelleinrichtung lösbaren oder selbsttätig lösenden Mechanismus in Richtung der Bremsscheibe zu verschieben, nachdem zuvor der elektromechanische Stellantrieb mit Unterstützung der Löseeinrichtung die Druckstücke so weit von der Bremsscheibe wegbewegt hat, daß bei einem ggf. unzulässig kleinen Lüftspiel infolge von Erwärmung und Verspannung der Bremse mindestens der Betrag des Soll-Lüftspiels erreicht wird.

Die Verschleißnachstelleinrichtung wird dabei solange betätigt, bis die Bremsbacken Kontakt mit der Bremsscheibe haben. Danach wird durch Lösen des Lüftspiel-Sicherungsmechanismus das Soll-Lüftspiel wiederhergestellt, indem der Bremshebel und/oder die Kolbeneinheit durch den Stellantrieb oder selbsttätig wieder um den bestimmten Betrag von der Bremsscheibe wegbewegt werden.

Dieses Verfahren erleichtert auch das Einstellen des Lüftspiels an sich, da das Soll-Lüftspiel durch den Betrag des Zustellhubes des Lüftspiel-Sicherungsmechanismus bzw. des Lösemechanismus als festes Konstruktionsmerkmale vorgegeben ist und nicht durch elektronisch gesteuertes Zurückstehen der Nachstellspindeln eingestellt werden muß.

Alternativ zu dem beschriebenen Rampensystem ist es auch möglich, eine Art Klemmrollenfreilauf oder einen Klemmkörperfreilauf als Löseeinrichtung vorzusehen. Auch diese beiden Varianten der Löseeinrichtung sind preiswert konstruktiv realisierbar und auch besonders kompakt zwischen Nachstellmutter und Bremssattel oder einem anderen Abstützelement anbringbar. So ist es möglich, an der Stirnfläche der Nachstellmutter bzw. in einem auf diese aufgesetzten Ring Vertiefungen einzulassen, welche die Klemmkörper aufnehmen. Im Falle eines Klemmrollensystems sind diese Vertiefungen vorzugsweise rampenförmig. Im Falle des Klemmkörpersystems werden sie vorzugsweise parallel zur Abstützfläche ausgebildet.

Mit dem erfindungsgemäßen Verfahren kann zunächst zur Lüftspieleinstellung in einer Ansteuerung des Antriebsmotors zunächst ein Rückstellen der Drehstellspindeln zur Sicherung des Mindestlüftspiels erfolgen. Danach erfolgt eine erneute Ansteuerung im Sinne einer Zustellbewegung der Nachstelldrehspindeln, wobei gleichzeitig die Zustellbewegung der Lüftspielsicherung ausgelöst wird. Nach einer ausreichend bemessenen Wartezeit, die so ausgelegt ist, daß die Bremsbacken an die Bremsscheibe anlegbar sind, wird mit dem Stellantrieb ein rückdrehender Löseimpuls für die Lüftspielsicherung eingeleitet, um das Soll-Lüftspiel zu sichern. Auf diese Weise wird mit sehr einfachen Mitteln und geringem Sensierungs- und Steuerungsaufwand eine sehr zuverlässig arbeitende elektromechanische Verschleißnachstellung realisiert.

Alternativ zum Abwarten einer Wartezeit kann auch über eine Sensierung des Endes der Drehbewegung des Motors (Stoperkennung) oder über einen Überstromsensor der Haltezeitpunkt des Stellantriebs ermittelt werden.

Weitere vorteilhafte Ausgestaltungen der Erfindung sind den übrigen Unteransprüchen zu entnehmen.

Nachfolgend werden Ausführungsbeispiele anhand der Zeichnung näher beschrieben.

Es zeigt:
- Figur 1: einen Schnitt durch einen Teil einer Scheibenbremse mit einem Nachstellsystem zum Nachstellen des Belagverschleißes,
- Figur 2 bis 4: Schnitte durch Elemente verschiedener Varianten von Löseeinrichtungen für Verschleißnachstellsysteme;
- Figur 5, 6: Schnitte durch Elemente von Nachstelldreheinrichtungen;
- Figur 7: eine Sprengansicht einer Nachstellmutter mit Rampenscheibe und eine Ansicht der zusammengesetzten Elemente; und
- Figur 8: einen Schnitt durch eine Scheibenbremse.

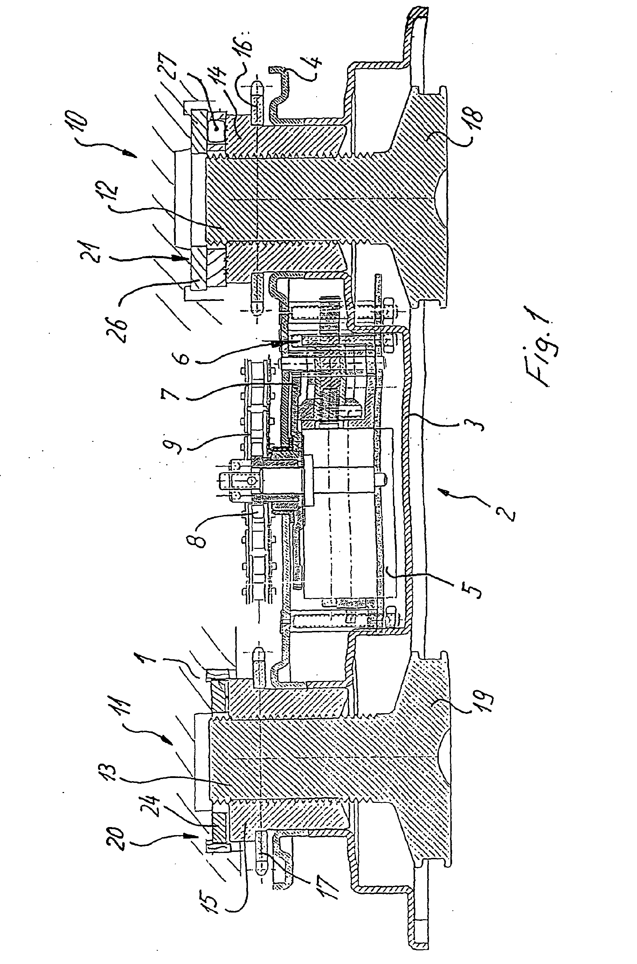

Zunächst sei Figur 1 beschrieben.

Figur 1 zeigt im wesentlichen ein Nachstellmodul für eine Scheibenbremse, die einen Bremssattel 1 aufweist.

Dargestellt ist hier der der Zuspannvorrichtung gegenüberliegende Bereich der Bremse.

Die Zuspannvorrichtung kann beispielsweise nach Art der gattungsgemäßen Druckschrift ausgebildet sein.

Allerdings betrifft die vorliegende Konstruktion auch eine Festsattelscheibenbremse oder eine Scheibenbremse mit nur sehr geringem Verschiebe- oder Verschwenkweg des Bremssattels, wobei vorzugsweise auch auf der der Zuspannvorrichtung gegenüberliegenden Seite der Bremsscheibe eine Nachstellung des Bremsbelagverschleißes erfolgen muß (siehe Figur 8).

In einer Ausnehmung des Bremssattels 1 ist ein Nachstellmodul 2 angeordnet. Dieses Nachstellmodul 2 umfaßt eine erste Montageplatte 3 und eine an die erste Montageplatte 3 angesetzte zweite Montageplatte 4. Hier ist auf der Montageplatte 3 ein Elektromotor 5 angeordnet, welcher über ein Getriebe 6 mit Zahnrädern 7 und 8 eine Kette 9 antreibt, welche um zwei parallel zueinander angeordnete Nachstelldreheinrichtungen 10, 11 herumgeführt ist, die jeweils eine Drehspindel 12, 13 aufweisen, welche in Nachstellmuttern 14, 15 verschraubt sind, auf die jeweils Zahnräder 16, 17 aufgesetzt sind, mit denen die Kette 9 kämmt. Es ist auch denkbar, den Elektromotor außen am Bremssattel anzuordnen und über eine den Bremssattel durchsetzende Welle mit dem Getriebe zu verbinden (nicht dargestellt).

An ihrem von der Bremsscheibe abgewandten, d.h. zum Bremssattel hin liegenden Ende ist die Nachstelldreheinrichtung am Bremssattel 1 abgestützt. An ihrem zur Bremsscheibe hin gewandten Ende weisen die Nachstelldrehspindeln 12, 13 jeweils Druckstücke 18, 19 auf, welche auf die hier nicht dargestellten Bremsbeläge einwirken.

Zum Nachstellen der Bremse werden die Nachstellmuttern mittels des Elektromotors 3 und des Getriebes sowie der Zahnräder 7, 8 und der Kette 9 verdreht, so daß die Drehspindeln 12,13 in Richtung der Bremsscheibe verschoben werden.

Zwischen den Nachstellmuttern 14, 15 und dem Bremssattel 1 sind - rein beispielhaft - bei der linken Nachstellmutter 15 und der rechten Nachstellmutter 14 jeweils verschiedende Elemente angeordnet, um die Erfindung an zwei verschiedenen Varianten näher zu erläutern. In der Praxis werden die Löseeinrichtungen 20, 21 identisch ausgelegt.

Erfindungsgemäß wird das Lösen der Drehspindeln von Bremsbelägen bzw. das Lösen der Bremsbeläge von der Bremsscheibe durch mechanisch wirkende Löseeinrichtungen 20, 21 erleichtert. Das bedeutet, daß die Wirkung des Elektromotors 5 beim Lösen der Nachstelleinrichtung 10, 11 unterstützt wird.

Bei dem im linken Bereich der Zeichnung sowie in Figur 2 dargestellten Funktionsprinzip der Löseeinrichtung 20 ist die Abstützfläche der Nachstellmutter 15 mit einem Rampenprofil 22 versehen (siehe Figur 2), welches mit einem entsprechenden Rampenprofil 23 einer Abstützscheibe 24 zusammenwirkt, welche sich axial an die Nachstellmutter 15 anschließt und die mit ihrer von der Nachstellmutter abgewandten Fläche am Bremssattel 1 abgestützt ist. Die ebene Rückseite der Abstützscheibe 24 gewährleistet in dieser Form am Bremssattel die Weiterleitung der Reaktionskraft aus dem Kolbensystem.

Bei einer Betätigung der Bremse wird die aus der Zuspannkraft der Bremse resultierende Reaktionskraft vom Druckstück 19 über das Nachstellgewinde zwischen der Drehspindel 13 und der Nachstellmutter 15 auf die Nachstellmutter 15 und über deren bremsscheibenabgewandte und mit dem Rampenprofil versehene Stirnfläche auf die Abstützscheibe 24 und von dort auf die Abstützfläche am Bremssattel 1 abgeleitet.

Dies erleichtert das Lösen der Nachstelldreheinrichtung auf einfache mechanische Weise.

Das Rampenprofil kann direkt in die entsprechende Stirnfläche der Nachstellmutter 15 eingeprägt werden oder auf andere Weise dort eingebracht sein. Das Rampenprofil kann auch in einer zusätzlichen Rampenscheibe enthalten sein, die auf der Stirnfläche der Nachstellmutter aufliegt (hier nicht dargestellt).

Bei einem Lüftspieleinstellvorgang durch den elektromechanischen Antrieb 5 erfolgt zunächst eine Verdrehung der Nachstellmutter 15 im Sinne eines Herausdrehens des mit dem Nachstellgewindebolzen bzw. der Drehspindel 13 verbundenen oder einstükkig ausgebildeten Druckstückes 19.

Bei Beginn der Verstellbewegung verdreht sich die Nachstellmutter 15 zunächst gegen die Rampenscheibe 24 um einen vorbestimmten Verdrehwinkel, bis ein Anschlag erreicht wird. Daraufhin verschiebt sie sich entsprechend der Steigung des Rampenprofils um einen vorbestimmten Betrag mitsamt dem eingeschraubten Druckstück 19 gegen die Bremsscheibe.

Der Betrag dieser Verschiebung entspricht dem konstruktiv vorgegebenen Soll-Lüftspiel.

Bei diesem ersten, begrenzten Teil der Stellbewegung kann auch bereits eine Verstellung des Druckstückes 19 relativ zur Nachstellmutter 15 über das Nachstellgewinde erfolgen. In diesem Fall ergibt sich das Soll-Lüftspiel aus der Summe der axialen Verstellbewegungen der Nachstellmutter 15 relativ zum Bremssattel 1 und zum Druckstück 19 relativ zur Nachstellmutter 15.

Es ist auch möglich, die Verstellung des Druckstückes 24 relativ zur Nachstellmutter 15 im Bereich der zu Lüftspielsicherung vorgesehenen Verdrehung der Nachstellmutter 15 zu vermeiden, indem die Verdrehsicherung des Druckstückes 15 bzw. des Nachstellgewindebolzens (Drehspindel 13) mit einem Schwenkspiel versehen wird, welches im Betrag dem zur Lüftspielsicherung notwendigen Verdrehwinkel der Nachstellmutter 15 entspricht.

Zur Gewährleistung der Funktionsfähigkeit der Löseeinrichtung ist es vorteilhaft, wenn die Verdrehhemmung der Abstützscheibe 24 gegen die Abstützfläche am Bremssattel 1 in jedem Betriebszustand größer ist als die Verdrehhemmung zwischen der Nachstellmutter 15 und der Abstützscheibe 24.

Dies bedeutet, daß bei Beginn der Verdrehbewegung der Nachstellmutter 15 die Abstützscheibe mit dem Rampenprofil 23 während der Verschiebung der Nachstellmutter 15 in der Rampenverzahnung eine Abstützfläche zum Bremssattel ohne Verdrehung haften und erst nach Erreichen des Verdrehanschlages im Sinne der eigentlichen Nachstellbewegung des Druckstückes 19 mit der Nachstellmutter 15 weitergedreht werden soll.

Eine derartige Verdrehhemmung der Rampenscheibe ist auf einfache Weise realisierbar.

So kann beispielsweise einer reibungserhöhende Beschichtung auf der Abstützfläche der Rampenscheibe 24 vorgesehen sein. Alternativ oder zusätzlich ist es auch möglich, eine reibungsmindernde Beschichtung auf der Seite des Rampenprofils 22, 23 vorzusehen.

Eine Reibungserhöhung ist beispielsweise durch eine Diamantstaubbeschichtung bis zu Reibwerten von 0,5 möglich. Eine Reibungsminderung kann auf einfache Weise durch eine Gleitlackbeschichtung realisiert werden.

Alternativ ist es auch möglich, zur Erhöhung der Verdrehhemmung eine Art Bremsmechanismus an der Rampenscheibe 24 vorzusehen. Dies ist beispielsweise durch eine Reibkraft am Umfang der Rampenscheibe 24, vorzugsweise durch ein schleifendes Federelement nach Art eines Toleranzringes (hier nicht dargestellt) realisierbar.

Alternativ ist es auch möglich, nach Art der Figur 2 und 3 anstelle eines Rampensystems eine Löseeinrichtung 21 nach Art eines Klemmrollen- oder Klemmkörperfreilaufes zur Axialverstellung einzusetzen.

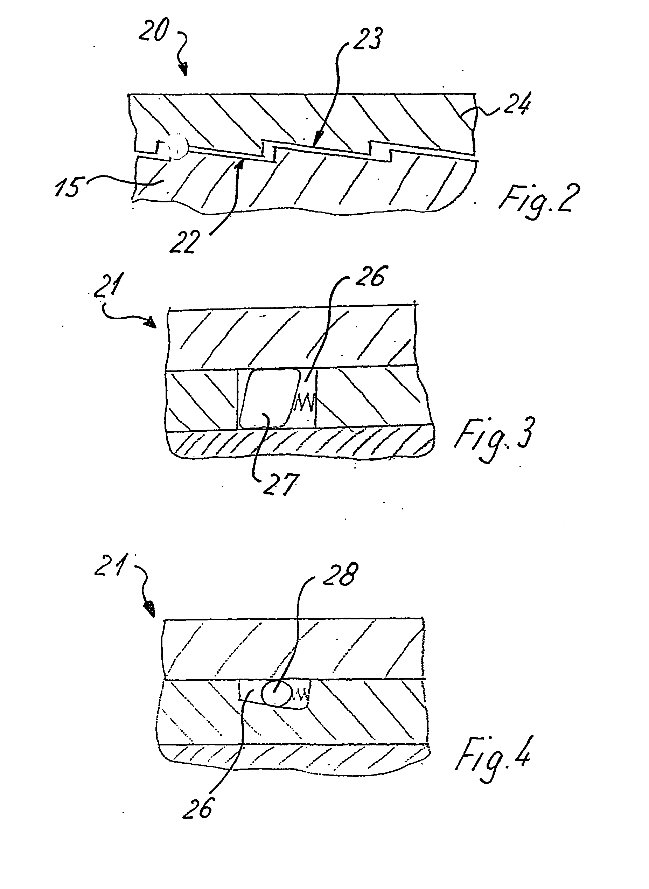

Wie im rechten Teil der Figur 1 sowie in Figur 3 und Figur 4 erkennbar, sind sowohl bei einer Realisierung als Klemmrollenfreilauf als auch bei einer Realisierung als Klemmkörperfreilauf an der Stirnfläche der Nachstellmutter 14 oder - hier dargestellt - in einem zwischen Nachstellmutter und Abstützscheibe 24 angeordneten Ring 26 Ausnehmungen 25 vorgesehen, welche die Klemmkörper 27 oder die Klemmrollen 28 aufnehmen.

Im Falle eines Klemmrollensystems (Figur 3) sind diese Vertiefungen 26 mit einer Rampenform versehen. Im Falle des Klemmkörpersystems (Fig. 2) verlaufen sie dagegen parallel zur Abstützfläche.

Bei dem Klemmkörpersystem verschwenken die Klemmkörper 27 infolge ihrer freilaufartigen Klemmwirkung bei beginnender Verstellbewegung. Der dabei entstehende Höhenunterschied der Klemmkörper bewirkt die axiale Verstellung der Nachstellmutter 14.

Bei dem Klemmrollensystem der Figur 4 greift dagegen bei beginnender Verstellbewegung die freilaufartige Sperrwirkung der Klemmrollen 28. Da wegen der Verdrehhemmung der oberen, in dem Fall ebenen Abstützscheibe 24 diese nicht bewegt werden kann, rollen die Klemmrollen 28 an den Rampenebenen hoch und bewirken dabei die Axialverstellung der Nachstellmutter 14.

Vorzugsweise erfolgt der weitere Ablauf der Lüftspieleinstellung derart, daß über ein weiteres Verdrehen der Nachstellmutter 14 das Druckstück 18 so weit herausgeschraubt wird, daß die Bremsbacke bzw. der Bremsbelag mit der Bremsscheibe in Kontakt gelangt. Durch die nunmehr wirkenden Reibkräfte im Kraftübertragungseweg (Druckstückanlagefläche, Nachstellgewinde, Rampenscheibenabstützfläche) wird die weitere Nachstellbewegung gestoppt. Nach Erkennen dieses Zustandes z.B. über die Stromaufnahme des Elektromotors bzw. nach einer ausreichend bemessenen Haltezeit in diesem Zustand wird die Nachstellmutter 14 um den zur Freigabe des Lüftspiels notwendigen Verdrehwinkel zurückgedreht.

In dem kritischen Fall, daß gerade in dem Moment, bei dem während eines Lüftspieleinstellvorgangs die Bremsbacken an die Bremsscheibe angelegt sind, eine erneute Bremsung eingeleitet wird, kann nunmehr die Nachstellmutter 14 durch den elektrischen Verstellmechanismus auch bei verspannter Bremse auf einfache Weise in ihre das Lüftspiel wiederherstellende Ausgangsposition zurückgedreht werden. Dies ist möglich, da der Verdrehwiderstand in dem Klemmkörper, Kugelrampen- oder Gleitrampenmechanismus in Löserichtung aufgrund der gewählten Geometrien an den Rampen- bzw. im Klemmsystem so gering ist, daß das Lösen mit sehr geringem Kraftaufwand möglich wird bzw. nahezu selbsttätig erfolgt.

So ist es beispielsweise möglich, bei dem Rampensystem der Figur 1 und 2 den Rampenwinkel mit ca. 10° derart zu wählen, daß bei den gegebenen Reibverhältnissen (Stahl auf Stahl, gehärtet) bereits eine Selbsthemmungsfreiheit eintritt.

Im Fall des Lüftspieleinstellvorgangs muß beim Anlegen der Bremsbacken die entstehende Reaktionskraft anteilig durch entsprechende Stellkräfte der Nachstell-Dreheinrichtung kompensiert werden, da über die selbsthemmungsfreie Gleitrampe eine Rückdrehkraft erzeugt wird.

Erfolgt nunmehr eine Betriebsbremsung mit hoher Kraft, wird die Verstellkraft des Nachstell-Drehantriebes überwunden und die Nachstellmutter 14, 15 wird selbsttätig in ihre das Lüftspiel sichernde Ausgangsposition zurückgedreht. Bei Verwendung eines Kugelrampen- oder Klemmkörpersystems erfolgt dieser Vorgang in äquivalenter Form.

Bei einer Scheibenbremse der gattungsgemäßen Ausführungsart mit einem Schiebesattel ist es auch möglich, daß beim Einleiten eines Lüftspiel-Einstellvorgangs der Bremshebel um einen bestimmten, dem Mindestlüftspiel entsprechenden Betrag im Sinne einer Zuspannbewegung zugestellt wird. Die Lüftspieleinstellung erfolgt dann in der in der DE 197 31 696 A1 beschriebenen Weise. Nach dem Anlegen der Bremsbakken wird der Hebel wieder in seine Ausgangsstellung zurückgeführt und damit das Luftspiel eingestellt. Der das Lüftspiel sichernde Vorhub des Bremshebels kann durch einen separaten.Steller erfolgen, vorzugsweise jedoch durch den elektromechanischen Verstellantrieb, in dem über ein vom gleichen Stellantrieb betriebenes Element wie z.B. einen Exzenternocken bei Beginn der Verstellbewegung der Vorhub des Bremshebels erzeugt wird.

Es ist auch möglich, bei der gattungsgemäßen Bremse die Traverse relativ zum Bremshebel um den Betrag des Lüftspiels in Richtung der Bremsscheibe zu verschieben. So wird z.B. im Falle einer durch die Exzenterachse verlaufende Nachstell-Synchronisationswelle mit Kegelrädern an den Enden bei Betätigung des Nachstellsystems durch mit der Synchronisationswelle verbundene Exzenter- oder Kurvenscheiben der Exzenterbolzen um den Betrag des vorgegebenen Lüftspiels von seinem Sitz in der Traverse abgehoben.

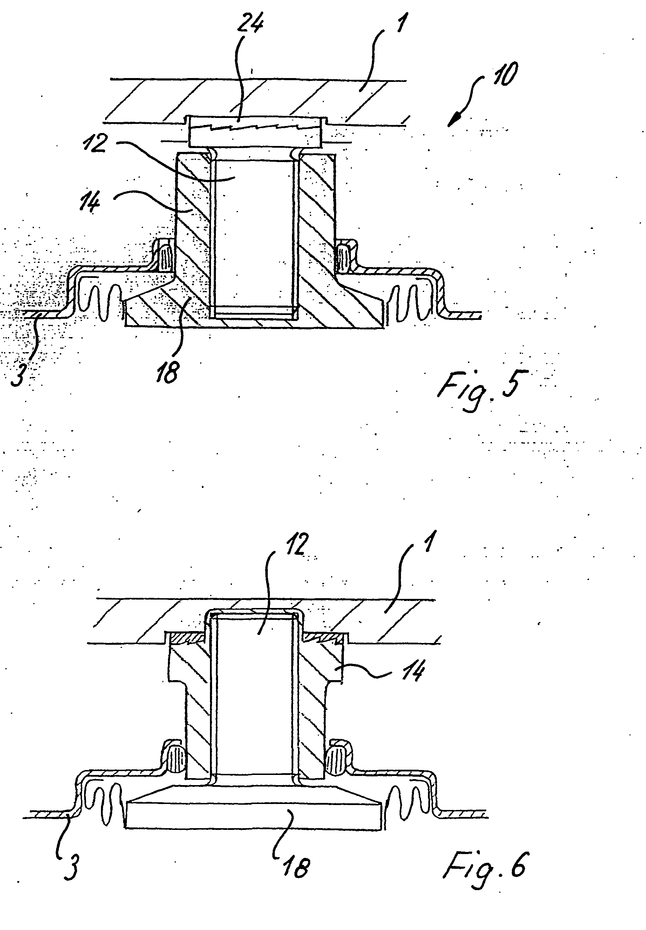

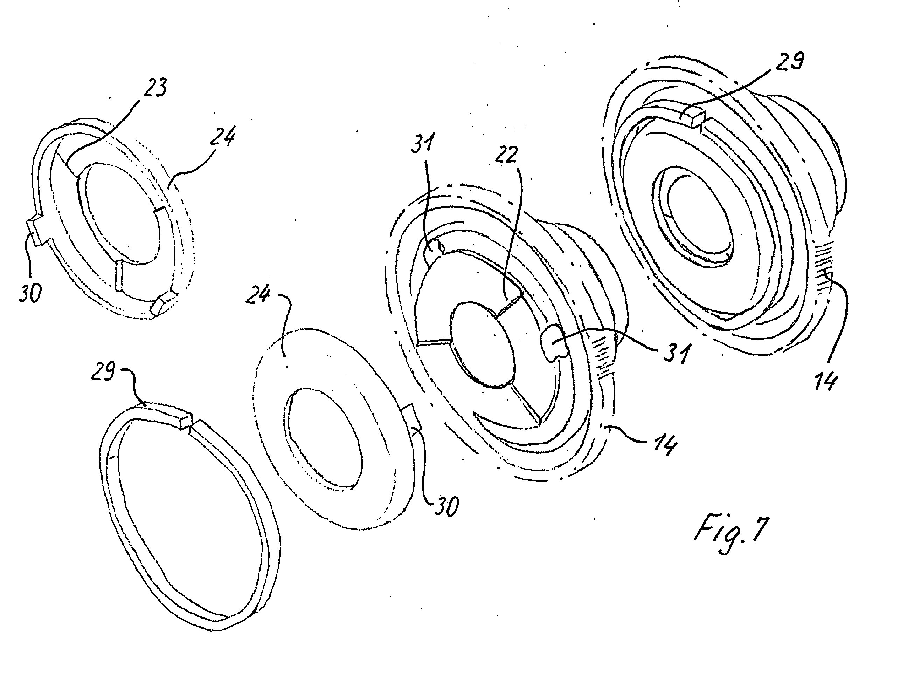

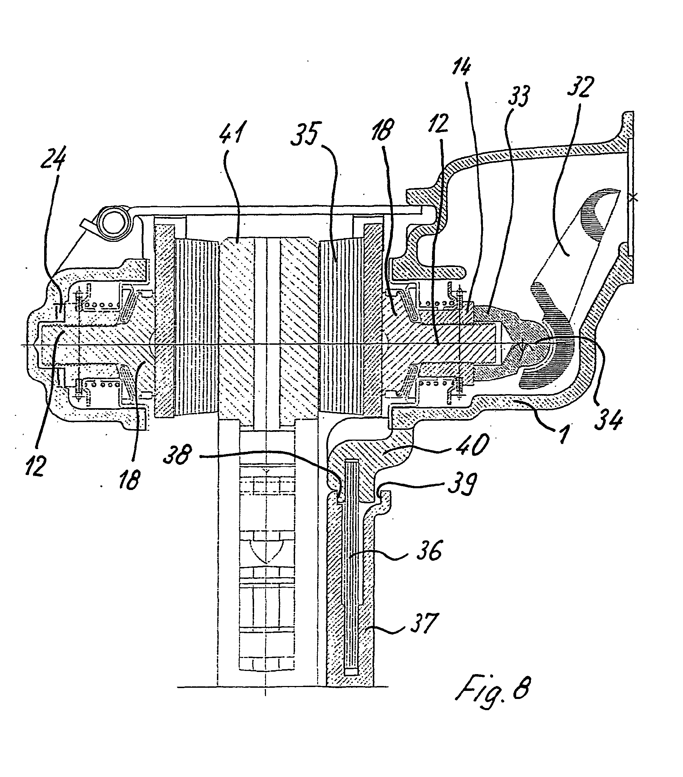

Nach Fig. 6 weist die Nachstellerdreheinrichtung 10 die Nachstellmutter 14 auf, in welche die Drehspindel 12 eingeschraubt ist, welche an einem ihrer Enden das auf den Bremsbelag wirkende Druckstück 18 aufweist. Das Rampenprofil ist einerseits im Bremssattel 1 und andererseits an der Stirnseite der Nachstellmutter 24 ausgebildet.

Nach Fig. 5 weist dagegen die Nachstellmutter 14 das Druckstück 18 auf (es ist hier an diese angeformt) und die Drehspindel 12 mit einem schraubenartigen Kopf stützt sich an ihrem von der Nachstellmutter abgewandten axialen Ende - also im Bereich ihres Kopfes - selbst an einer Rampenscheibe 24 ab und weist im Bereich der Stirnseite des Kopfes selbst ein entsprechendes Rampenprofil auf.

Fig. 7 zeigt eine perspektivische Ansicht einer Nachstellmutter 14, die an ihrer Stirnseite das Rampenprofil aufweist. Auf diese Stirnseite ist die Rampenscheibe 24 aufsetzbar, welche von einer Reibfeder 29 als die Verdrehhemmung erhöhendes Bremselement umfasst wird.

Zapfen 30 an der Rampenscheibe 24 greifen zur Gewährleistung der Lösefunktion in geeignet dimensionierte Ausnehmungen 31 der Nachstellmutter und dienen als Verdrehwinkelsicherung. Am rechten Rand der Fig. 7 ist eine aus den im linken Teil der Fig. 7 dargestellten Elementen vormontierte Einheit zu erkennen.

Fig. 8 zeigt einen Schnitt durch eine Schwenksattel-Scheibenbremse, bei welcher die in Fig. 1 bis 7 gezeigten Elemente einsetzbar sind.

Die Zuspannvorrichtung umfasst einen von einer Kolbenstange eines Bremszylinders (hier nicht dargestellt) betätigbaren Drehhebel 32, welcher über hier nicht erkennbare Lagerelemente wie Kugeln am Bremssattel 1 abgestützt ist. Der Drehhebel 32 wirkt an seiner vom Bremssattel 1 abgewandten Seite an einer oder zwei Stellen auf ein Zwischenelement 33 ein, welches an einem seiner Ende einen halbkugelartigen Ansatz 34 aufweist.

Wird der Drehhebel 32 verschwenkt, bewirkt das untere exzenterartige Ende (hier nicht zu erkennen) des Drehhebels 32 ein Vorschieben des Zwischenelementes 33 in Richtung der Bremsscheibe 41. Das Zwischenelement 33 wiederum drückt eine Nachstellmutter 14 nach vom, in welcher ein Stellspindel mit Druckstück verschraubt ist, welches an einem Bremsbelag 35 anliegt und dies bei Bremsungen vorschiebt.

Damit mit zunehmendem Bremsbelagverschleiß dieser nicht durch eine entsprechend große Schwenkbewegung des Bremssattels 1 ausgeglichen werden muß, ist auch auf der der Zuspannvorrichtung gegenüberliegenden Seite der Bremsscheibe 41 eine Nachstellvorrichtung vorgesehen (ein oder zwei Nachstelldrehantriebe), deren Nachstellmuttern 14 sich hier jeweils an Rampenscheiben 24 abstützten, deren ebene Rückseiten an der Bremssattelinnenoberfläche liegen.

Der Bremssattel 1 muß nur den Arbeitshub beim Zuspannen der Bremse durch ein Verschwenken überbrücken. Dies wird durch eine Art elastische Feder 36 realisiert, welche zwischen dem Bremssattel 1 und einem an einer Radachse befestigten Ansatz 37 angeordnet ist, wobei der Verschwenkwinkel von zwei Anschlägen 38, 39 zwischen einem untern Ansatz 40 des Bremssattels und dem Radachsenansatz 37 befestigt ist.

Auf der der Zuspannvorrichtung gegenüberliegenden Seite der Bremsscheibe sind die Rampenscheiben 24 zwischen Bremssattel und Nachstellmutter angeordnet.

### Bezugszeichenliste

- 1: Bremssattel
- 2: Nachstellmodul
- 3: Montageplatte
- 4: Montageplatte
- 5: Elektromotor
- 6: Getriebe
- 7: Zahnrad
- 8: Zahnrad
- 9: Kette
- 10: Nachstelldreheinrichtung
- 11: Nachstelldreheinrichtung
- 12: Drehspindel
- 13: Drehspindel
- 14: Nachstellmutter
- 15: Nachstellmutter
- 16: Zahnrad
- 17: Zahnrad
- 18: Druckstück
- 19: Druckstück
- 20: Löseeinrichtung
- 21: Löseeinrichtung
- 22: Rampenprofil
- 23: Rampenprofil
- 24: Abstützscheibe
- 25: Ausnehmung
- 26: Ring
- 27: Klemmkörper
- 28: Klemmrolle
- 29: Reibfeder
- 30: Zapfen
- 31: Ausnehmungen
- 32: Drehhebel
- 33: Zwischenelement
- 34: Ansatz
- 35: Bremsbelag
- 36: Feder
- 37: Ansatz
- 38: Anschlag
- 39: Anschlag
- 40: Ansatz
- 41: Bremsscheibe

## Patentansprüche

1. Scheibenbremse, insbesondere für Nutzfahrzeuge, mit
a) einem eine Bremsscheibe übergreifenden Bremssattel (1),
b) einer im Bremssattel angeordneten Zuspanneinrichtung zum Zuspannen von Bremsbelägen;
c) sowie wenigstens einem im Bremssattel angeordneten, vorzugsweise als Nachstellmodul (2) ausgelegten Nachstellsystem zum Ausgleich von Bremsbelag- und/oder Scheibenverschleiß durch Verstellen des Abstandes zwischen Bremsbelag (7) und Bremsscheibe (3),
d) wobei das Nachstellsystem wenigstens eine Nachsteller-Dreheinrichiung (10, 11) aufweist, auf welche ein elektromotorischer Antrieb (5) einwirkt,
**dadurch gekennzeichnet, daß**
e) das Nachstellsystem in Ergänzung des elektromotorischen Antriebes (5) zumindest eine das Lösen der Nachsteller-Dreheinrichtung (10, 11) unterstützende Löseeinrichtung (20, 21) aufweist.

2. Scheibenbremse nach Anspruch 1, **dadurch gekennzeichnet, daß** die Nachsteller-Dreheinrichtung (10, 11) eine Nachstellmutter (14, 15) aufweist, in der eine Drehspindel (12, 13) eingeschraubt ist, welche an einem ihrer Enden ein auf den Bremsbelag wirkendes Druckstück (18, 19) aufweist, wobei die Löseeinrichtung (20, 21) auf die Nachstellmutter (14, 15) oder die Drehspindel (12, 13) einwirkt.

3. Scheibenbremse nach Anspruch 1, **dadurch gekennzeichnet, daß** die Nachsteller-Dreheinrichtung (10, 11) eine Drehspindel (12) aufweist, auf die eine Nachstellmutter (14) aufgeschraubt ist, welche an einem ihrer Enden ein auf den Bremsbelag wirkendes Druckstück (18) aufweist, wobei die Löseeinrichtung (20,21) auf die Nachstellmutter oder die Drehspindel einwirkt.

4. Scheibenbremse nach Anspruch 2 oder 3, **dadurch gekennzeichnet, daß** als Löseeinrichtung die Druckabstützfläche der Nachstellmutter (14, 15) mit einem Rampenprofil (22, 23) versehen ist, wobei auf der Druckabstützfläche eine Rampenscheibe (24) mit einem entgegengesetzten Rampenprofil (22, 23) anliegt und wobei eine ebene Rückseite der Abstützscheibe (24) an einer Abstützfläche an einem Abstützelement (1) anliegt.

5. Scheibenbremse nach Anspruch 4, **dadurch gekennzeichnet, daß** das Rampenprofil direkt in die Stirnfläche der Nachstellmutter (15) oder der Drehspindel (12) eingeformt, insbesondere eingeprägt ist.

6. Scheibenbremse nach einem der Ansprüche 4 oder 5, **dadurch gekennzeichnet, daß** das Abstützelement der Bremssattel (1) oder ein Element der Zuspanneinheit ist.

7. Scheibenbremse nach einem der Ansprüche 4 bis 6, **dadurch gekennzeichnet, daß** das Rampenprofil direkt in den Bremssattel (1) oder das Element der Zuspanneinheit eingeformt ist.

8. Scheibenbremse nach einem der Ansprüche 4 bis 7, **dadurch gekennzeichnet, daß** die Rampenscheibe (24) auf der Stirnfläche der Nachstellmutter (14) oder der Drehspindel (12) unverdrehbar aufliegt.

9. Scheibenbremse nach einem der Ansprüche 4 bis 8, **dadurch gekennzeichnet, daß** die Verdrehhemmung der Rampenscheibe (24) gegen die Abstützfläche am Bremssattel derart ausgelegt ist, daß sie in jedem Betriebszustand größer ist als die Verdrehhemmung zwischen der Nachstellmutter (15) oder der Drehspindel und der Rampenscheibe (24).

10. Scheibenbremse nach einem der Ansprüche 4 bis 9, **dadurch gekennzeichnet, daß** die Rampenscheibe (24) mit einer reibungserhöhenden Beschichtung auf der Abstützfläche der Rampenscheibe (24) und/oder einer reibungsmindernden Beschichtung auf der Seite des Rampenprofils versehen ist.

11. Scheibenbremse nach Anspruch 10, **dadurch gekennzeichnet, daß** die reibungserhöhende Beschichtung eine Diamantstaubbeschichtung ist.

12. Scheibenbremse nach einem der Ansprüche 10 oder 11, **dadurch gekennzeichnet, daß** die reibungsmindernde Beschichtung eine Gleitlackbeschichtung ist.

13. Scheibenbremse nach einem der Ansprüche 4 bis 12, **dadurch gekennzeichnet, daß** gegen die Rampenscheibe (24) ein die Verdrehhemmung erhöhendes Bremselement, insbesondere ein schleifendes Federelement nach Art eines Toleranzringes oder einer Reibfeder (29) einwirkt.

14. Scheibenbremse nach einem der vorstehenden Ansprüche, **dadurch gekennzeichnet, daß** die Löseeinrichtung als Klemmrollen- oder KlemmkörperFreilauf ausgelegt ist.

15. Scheibenbremse nach einem der vorstehenden Ansprüche, **dadurch gekennzeichnet, daß** an der Stirnfläche der Nachstellmutter und/oder in einen aufgesetzten Ring Vertiefungen (26) eingelassen sind, welche Klemmkörper (27) oder Klemmrollen (28) aufnehmen.

16. Scheibenbremse nach Anspruch 15, **dadurch gekennzeichnet, daß** die Vertiefungen (26) eine Rampenform aufweisen.

17. Scheibenbremse nach einem der Ansprüche 15 oder 16, **dadurch gekennzeichnet, daß** die Vertiefungen (26) zur Ausbildung eines KlemmkörperSystems parallel zur Abstützfläche ausgebildet sind.

18. Scheibenbremse nach einem der verstehenden Ansprüche, **dadurch gekennzeichnet, daß** der Rampenwinkel beim Gleitrampensystem derart ausgelegt ist, daß Selbsthemmungsfreiheit erreicht wird.

19. Scheibenbremse nach einem der vorstehenden Ansprüche, **dadurch gekennzeichnet, daß** die Löseeinrichtung (20, 21) elektromechanisch ausgelegt ist.

20. Scheibenbremse nach einem der vorstehenden Ansprüche, **dadurch gekennzeichnet, daß** die Löseeinrichtung (20, 21) als Piezzo-System ausgelegt ist, wobei Piezzo-Körper vorgelegt sind, welche bei Bestromung ihre Geometrie derart verändern, daß die Lösebewegung des Nachstellmechanismus unterstützt wird.

21. Verfahren zur Steuerung des Nachstellsystems einer Scheibenbremse, insbesondere einer Scheibenbremse nach einem der vorstehenden Ansprüche, **dadurch gekennzeichnet, daß**
- zunächst zur Lüftspieleinstellung ein Rückstellen der Nachdrehspindel zur Sicherung des Mindestlüftspiels erfolgt,
- woraufhin eine erneute Ansteuerung im Sinne einer Zustellbewegung der Nachstelldrehspindeln erfolgt,
- wobei die Zustellbewegung der Lüftspielsicherung ausgelöst wird und woraufhin nach einer ausreichend bemessenen Wartezeit, die so ausgelegt ist, daß die Bremsbacken bzw. -beläge an die Bremsscheiben anlegbar sind - oder nach einer Ermittlung des Haltezeitpunktes des Motors mittels einer Sensierung des Endes der Drehbewegung des Motors (Stoperkennung) oder mit einem Überstromsensor - mit dem Antrieb ein rückdrehender Löseimpuls für die Lüftspielsicherung eingeleitet wird, um das Soll-Lüftspiel zu sichern, und
- wobei das Lösen der Bremse mit elektromechanischen Antrieb (5) unter der Wirkung einer zusätzlichen Löseeinrichtung (20, 21) erfolgt.

## Claims

1. Disc brake, in particular for commercial vehicles, with
a) a brake caliper (1) which spans across a brake disc,
b) a brake application device arranged in the brake caliper to tighten the brake linings,
c) and at least one adjusting system, preferably designed as an adjusting module (2), arranged in the brake caliper for the compensation of brake lining and/or brake disc wear by adjusting the distance between the brake lining (7) and the brake disc (3),
d) such that the adjusting system comprises at least one rotary adjusting device (10, 11) acted upon by an electric motor drive (5),
**characterised in that**
e) to supplement the electric motor drive (5) the adjusting system comprises at least one releasing device (20, 21) which supports the release of the rotary adjusting device (10, 11).

2. Disc brake according to Claim 1, **characterised in that** the rotary adjusting device (10, 11) comprises an adjusting nut (14, 15) into which is screwed a rotating spindle (12, 13) which has at one of its ends a pressure element (18, 19) that acts on the brake lining, and the releasing device (20, 21) acts upon the adjusting nut (14, 15) or the rotating spindle (12, 13).

3. Disc brake according to Claim 1, **characterised in that** the rotary adjusting device (10, 11) comprises a rotating spindle (12) onto which is screwed an adjusting nut (14) which has at one of its ends a pressure element (18) that acts upon the brake lining, and the releasing device (20, 21) acts upon the adjusting nut or the rotating spindle.

4. Disc brake according to Claims 2 or 3, **characterised in that** as the releasing device the pressure supporting surface of the adjusting nut (14, 15) is provided with a ramp profile (22, 23), such that a ramp disc (24) with an opposite ramp profile (22, 23) is in contact with the pressure supporting surface and such that a reverse ride of the support disc (24) is in contact with a supporting surface on a support element (1).

5. Disc brake according to Claim 4, **characterised in that** the ramp profile is formed directly on the end face of the adjusting nut (15) or the rotating spindle (12), in particular by pressing.

6. Disc brake according to either of Claims 4 or 5, the support element is the brake caliper (1) or an element of the brake application unit.

7. Disc brake according to any of Claims 4 to 6, **characterised in that** the ramp profile is formed directly in the brake caliper (1) or the element of the brake application unit.

8. Disc brake according to any of Claims 4 to 7, **characterised in that** the ramp disc (24) rests in rotationally fixed contact against the end face of the adjusting nut (14) or the rotating spindle (12).

9. Disc brake according to any of Claims 4 to 8, **characterised in that** the rotation resistance of the ramp disc (24) against the supporting surface on the brake caliper is such that in any operating condition it is greater than the rotation resistance between the adjusting nut (15) or rotating spindle and the ramp disc (24).

10. Disc brake according to any of Claims 4 to 9, **characterised in that** the ramp disc (24) is provided with a friction-enhancing coating on the supporting surface of the ramp disc (24) and/or a friction-reducing coating on the ramp profile side.

11. Disc brake according to Claim 10, **characterised in that** the friction-enhancing coating is a diamond powder coating.

12. Disc brake according to Claims 10 or 11, **characterised in that** the friction-reducing coating is an anti-friction paint coating.

13. Disc brake according to any of Claims 4 to 12, **characterised in that** a brake element that increases the rotation resistance, in particular a rubbing spring element of the tolerance ring type or a friction spring (29), acts against the ramp disc (240.

14. Disc brake according to any of the preceding claims, **characterised in that** the releasing device is designed as a free-running grip roller or clamping body.

15. Disc brake according to any of the preceding claims, **characterised in that** recesses (26) are formed in the end face of the adjusting nut and/or in a ring positioned on it, which hold clamping bodies (27) or grip rollers (28).

16. Disc brake according to Claim 15, **characterised in that** the recesses (26) have a ramp shape.

17. Disc brake according to either of Claims 15 or 16, **characterised in that** to form a clamping body system the recesses (26) are formed parallel to the supporting surface.

18. Disc brake according to any of the preceding claims, **characterised in that** the ramp angle in the sliding ramp system is chosen to ensure freedom from self-locking.

19. Disc brake according to any of the preceding claims, **characterised in that** the releasing device (20, 21) is of electro-mechanical design.

20. Disc brake according to any of the preceding claims, **characterised in that** the releasing device (20, 21) is designed as a piezoelectric system such that piezo-active bodies are provided, which when energised, change their geometry in such manner that the release movement of the adjusting mechanism is supported.

21. Method for the control of the adjusting system of a disc brake, in particular a disc brake according to any of the preceding claims, **characterised in that**
- first, to adjust the air gap the rotating adjusting spindle is retracted to produce the minimum air gap,
- whereupon the rotating adjusting spindle is actuated again in the direction of a forward feed movement,
- whereby this forward feed movement eliminates the air gap and whereupon, after a sufficiently long delay time chosen such that the brake blocks or linings can be brought in contact with the brake disc - or after determining the moment when the motor has stopped by sensing the end of its rotation movement (stop recognition) or by means of an overload sensor - the drive delivers a reverse rotation release pulse to produce the air gap and ensure the presence of the nominal air gap, and
- the brake is released by the electro-mechanical drive (5) with the supporting action of an additional releasing device (20, 21).

## Revendications

1. Frein à disque, en particulier pour des véhicules utilitaires, comprenant
a) un étrier de frein (1) chevauchant un disque de frein,
b) un moyen de serrage disposé dans ledit étrier de frein à approcher des garnitures de frein;
c) ainsi qu'au moins un système de réglage disposé dans ledit étrier de frein, conçu, de préférence, sous forme d'un module de réglage (2), à compenser l'usure sur la garniture de frein et/ou le disque de frein par l'ajustement de l'écart entre ladite garniture de frein (7) et ledit disque de frein (3),
d) audit système de réglage comprenant au moins un moyen à tourner le régulateur (10, 11), sur lequel moyen agit un mécanisme de commande électromécanique (5),
**caractérisé en ce**
e) **que** ledit système de réglage comprend au mois un moyen de desserrage (20, 21) assistant le desserrage dudit moyen à tourner le régulateur (10, 11), supplémentaire audit mécanisme de commande électromécanique (5).

2. Frein à disque selon la revendication 1, **caractérisé en ce que** ledit moyen a tourner le régulateur (10, 11) comprend un écrou de réglage (14, 15), dans lequel se visse une broche rotative (12, 13), qui présente, à une de ses extrémités, une plaque d'appui (18, 19), audit moyen de desserrage (20, 21) agissant sur ledit écrou de réglage (14, 15) ou ladite broche rotative (12, 13).

3. Frein à disque selon la revendication 1, **caractérisé en ce que** ledit moyen à tourner le régulateur (10, 11) comprend une broche rotative (12), sur laquelle se visse un écrou de réglage (14), qui comprend, à une de ses extrémités, une plaque d'appui (18) agissant sur ladite garniture de frein, audit moyen de desserrage (20, 21) agissant sur ledit écrou de réglage ou ladite broche rotative..

4. Frein à disque selon la revendication 2 ou 3, **caractérisé en ce que** l'aire d'appui recevant la pression dudit écrou de réglage (14, 15), en tant que moyen de desserrage, est pourvu d'un profil à rampe (22, 23), à un disque à rampe (24) portant contre ladite aire d'appui recevant la pression par un profil à rampe (22, 23) inverse et à une face arrière plane dudit disque d'appui (24) portant contre une aire d'appui à un élément d'appui (1).

5. Frein à disque selon la revendication 4, **caractérisé en ce que** ledit profil à rampe est moulé, en particulier empreint, directement dans la face dudit écrou de réglage (15) ou de ladite broche rotative (12).

6. Frein à disque selon une quelconque des revendications 4 ou 5, **caractérisé en ce que** ledit étrier de frein (1) ou un élément de l'unité de serrage constitue ledit élément d'appui.

7. Frein à disque selon une quelconque des revendications 4 à 6, **caractérisé en ce que** ledit profil à rampe est moulé directement dans ledit étrier de frein (1) ou ledit élément de l'unité de serrage.

8. Frein à disque selon une quelconque des revendications 4 à 7, **caractérisé en ce que** ledit disque à rampe (24) reste sur la face dudit écrou de réglage (14) ou de ladite broche rotative (12) d'une manière à inhiber une torsion.

9. Frein à disque selon une quelconque des revendications 4 à 8, **caractérisé en ce que** l'effet inhibant une torsion dudit disque à rampe (24) contre l'aire d'appui audit étrier de frein est conçu d'une telle manière, qu'en chaque état opérationnel, il est plus grand que l'effort inhibant la torsion entre ledit écrou de réglage (15) ou de ladite broche rotative et le disque à rampe (24).

10. Frein à disque selon une quelconque des revendications 4 à 9, **caractérisé en ce que** ledit disque à rampe (24) est pourvu d'un revêtement augmentant le frottement sur l'aire d'appui dudit disque à rampe (24) et/ou d'un revêtement antifriction du côté dudit profil à rampe.

11. Frein à disque selon la revendication 10, **caractérisé en ce que** ledit revêtement augmentant le frottement est un revêtement en égrisée.

12. Frein à disque selon une quelconque des revendications 10 ou 11, **caractérisé en ce que** ledit revêtement antifriction est un revêtement en laque glissante.

13. Frein à disque selon une quelconque des revendications 4 à 12, **caractérisé en ce qu'**un élément de freinage, qui augmente l'effet inhibant la torsion, en particulier un élément de ressort glissant du type d'un anneau de tolérance ou d'un ressort de friction, agit contre ledit disque à rampe (24).

14. Frein à disque selon une quelconque des revendications précédentes, **caractérisé en ce que** ledit moyen de desserrage est conçu sous forme d'un moyen à roue libre à poulie à serrage ou à corps de serrage.

15. Frein à disque selon une quelconque des revendications précédentes, **caractérisé en ce que** des cavités (26) sont formé à la face dudit écrou de réglage et/ou dans un anneau y posé, qui reçoivent des corps de serrage (27) ou des poulies à serrage (28).

16. Frein à disque selon la revendication 15, **caractérisé en ce que** lesdites cavités (26) présentent une forme à rampe.

17. Frein à disque selon une quelconque des revendications 15 ou 16, **caractérisé en ce que** lesdites cavités sont configurées à former un système à corps de serrage en parallèle à ladite aire d'appui.

18. Frein à disque selon une quelconque des revendications précédentes, **caractérisé en ce que** l'angle de rampe dans ledit système à rampe glissante est conçu d'une manière à achever une liberté de blocage automatique.

19. Frein à disque selon une quelconque des revendications précédentes, **caractérisé en ce que** ledit moyen de desserrage (20, 21) a une configuration électromécanique.

20. Frein à disque selon une quelconque des revendications précédentes, **caractérisé en ce que** ledit moyen de desserrage (20, 21) est conçu sous forme d'un système piezo, dans lequel des corps piezo sont placés en amont, qui, en réponse à l'application d'un courant électrique, varient leur géométrie d'une telle façon, que le mouvement de desserrage dudit mécanisme de réglage soit assisté.

21. Procédé à commander le système de réglage d'un frein à disque, en particulier d'un frein à disque selon une quelconque des revendications précédentes, **caractérisé en ce**
- **que** d'abord, pour l'ajustement du jeu d'aération, ladite broche rotative régulatrice est remise afin d'assurer le jeu minimal d'aération,
- après quoi il y a une commande répétée en sens d'un mouvement de serrage desdites broches rotatives régulatrices,
- audit mouvement de serrage pour l'assurance du jeu minimal d'aération étant déclenché, et après quoi une impulsion de desserrage à rotation de rappel pour l'assurance du jeu d'aération est initié moyennant le mécanisme de commande afin d'assurer le jeu d'aération de consigne, à la fin d'un temps d'attente suffisant, qui est dimensionné d'une telle manière, que les mâchoires ou respectivement garnitures de frein puissent porter contre les disques de frein, ou suivant l'établissement du temps d'arrêt du moteur moyennant une détection de la fin du mouvement rotatif du moteur (détection d'arrêt) ou moyennant un capteur de surintensité, et
- dans lequel le desserrage du frein se fait moyennant ledit mécanisme de commande électromécanique (5) sous l'effet d'un moyen de desserrage (20, 21) supplémentaire.
